# EUROPEAN PATENT SPECIFICATION

(11) **EP 2 536 067 B1**
(45) Date of publication and mention of the grant of the patent: **31.10.2018**
(21) Application number: 10850535.5
(22) Date of filing: 20.07.2010
(51) Int. Cl.: H04L 12/24

(54) **APPARATUS AND METHOD FOR IMPLEMENTING POINT TO POINT PROTOCOL DATA SERVICE LINK-DISCONNECT**
VORRICHTUNG UND VERFAHREN ZUR IMPLEMENTIERUNG EINER VERBINDUNGSTRENNUNG BEI EINEM PUNKT-ZU-PUNKT-DATENDIENST
APPAREIL ET PROCÉDÉ PERMETTANT DE METTRE EN OEUVRE UNE DÉCONNEXION DE LA LIAISON DE SERVICE DE DONNÉES DE PROTOCOLE POINT À POINT

(30) Priority: 26.04.2010 CN 201010155205
(43) Date of publication of application: 19.12.2012
(73) Proprietor: ZTE Corporation, Shenzhen City, Guangdong Province 518057 (CN)
(72) Inventor: YAN, Xiaomei, Shenzhen City, Guangdong Province 518057 (CN)
(74) Representative: Murgitroyd & Company
(86) International application number: PCT/CN2010/075301
(87) International publication number: WO 2011/134204

(56) References cited:
- CN-A- 1 423 910
- CN-A- 1 808 987
- CN-A- 101 222 774
- US-A1- 2006 126 557
- US-B1- 6 654 360
- Qualcomm: "Qualcomm Ballot Comments on TIA/EIA/IS-2000.5-A-2", 3GPP2 DRAFT; C23-20010820-004-A(PN-3-4693.5-AD2_BALLOT_ VOTE-QCOM-COMMENTS), 3RD GENERATION PARTNERSHIP PROJECT 2, 3GPP2, 2500 WILSON BOULEVARD, SUITE 300, ARLINGTON, VIRGINIA 22201 ; USA , vol. TSGC 7 May 2003 (2003-05-07), pages 1-137, XP062136950, Retrieved from the Internet: URL:http://ftp.3gpp2.org/TSGC/Working/2001 /TSG-C_0108/TSG-C-0801-Portland/WG2/SWG23/ [retrieved on 2003-05-07]
- SIMPSON W ET AL: "The Point-to-Point Protocol (PPP); rfc1661.txt", INTERNET X.509 PUBLIC KEY INFRASTRUCTURE CERTIFICATE AND CERTIFICATE REVOCATION LIST (CRL) PROFILE; RFC5280.TXT, INTERNET SOCIETY (ISOC) 4, RUE DES FALAISES CH- 1205 GENEVA, SWITZERLAND, CH, 1 July 1994 (1994-07-01), XP015007448, ISSN: 0000-0003

## Description

### Technical Field

The present invention relates to the field of database technology, and more especially, to an apparatus and method for implementing point to point protocol data service link disconnection.

### Background of the Related Art

In the CDMA PPP (Point to Point Protocol) data service in the prior art, the user uses a USB data cable to connect a personal computer (PC) with a CDMA terminal, and if the user requests to disconnect the PPP link carrying PPP data service between the PC side and the network side by clicking the link icon in the PC, the PC sends a terminate request message to the network side through the CDMA terminal, and after the network side receives the message, it sends a terminate acknowledgement (ack) message to the PC through the CDMA terminal in order to achieve the link disconnection of the PPP data service.

However, it is likely that the PC is rebooted or the USB data cable is unplugged when the user performs the connection of PPP data service in the dormant state, and in this case, since the PC is not available, the PC cannot send the terminate request message to the network side through the CDMA terminal. Therefore, the connection of PPP data service is not needed any more at this moment, but the corresponding PPP link still exists for some time (such as half an hour) at the network side, and during this time, the network side still needs to maintain the related network resources and charge the user's PPP data service, thereby resulting in an unnecessary waste of network resources, and meanwhile, the user also has to pay the non-essential expenses.

The document US6654360B1 discloses an improved method and system for terminating dormant mode wireless packet data sessions when a remote network node becomes inaccessible. A wireless subscriber station sends the wireless network a termination notification identifying a packet data session corresponding to a remote network node that has become in accessible and should be terminated.

The document "Qualcomm: Qualcomm Ballot Comments on TIA/EIA/IS-2000.5-A-2, 3GPP2 DRAFT;" discloses MS sends a release order or sends a resource release request message on the traffic channel to indicate the BS that PPP is terminated when MS is in idle/dormant and users disconnects the computer from the mobile station.

The document "SIMPSON W ET AL: The point-to-point protocol (PPP); rfc1661.txt" discloses the terminate-request and terminate -ack scheme for closing a connection.

### Summary of the Invention

In view of the above analysis, the purpose of the present invention is to provide an apparatus and method for implementing point to point protocol data service link disconnection, to solve the problem of network resource waste since the PPP link is not disconnected instantly as well as the problem that the user has to pay unnecessary expenses in the existing PPP data service.

The purpose of the present invention is mainly implemented through the following technical solution:
an apparatus for implementing Point to Point Protocol data service link disconnection, being set in a terminal and comprising: a detection module, a processing module and a link disconnection module, wherein,
the detection module is configured to detect a state of a PC connected with the terminal when the terminal performs a Point to Point Protocol (PPP) data service in a dormant state, and inform the processing module when determining that the PC is currently in an unavailable state;
the processing module is configured after establishing a wireless link to send a link disconnection request to a network side when knowing that said PC is in the unavailable state and trigger the link disconnection module when receiving a link disconnection request acknowledgement from the network side;
the link disconnection module is configured to disconnect a PPP link carrying the PPP data service.

The processing module is specifically configured to: when knowing that the PC is currently in the unavailable state, judge whether a current state of the PPP data service is the dormant state or not, if the state is determined as the dormant state, construct and send a Link Control Protocol (LCP) terminate request message to the network side, and trigger the link disconnection module after receiving a LCP terminate request acknowledgement message returned by the network side.

Said processing module specifically comprises: a judgment unit, a message transmission unit and a timing unit, wherein
the judgment unit is configured to, when knowing that the PC is currently in the unavailable state, judge whether the current state of data service is the dormant state or not, and if the state is determined as the dormant state, trigger the message transmission unit;
the message transmission unit is configured to construct and send the LCP terminate request message to the network side, and trigger the timing unit to start timing;
the timing unit is configured to detect whether the LCP terminate request acknowledgement message returned by the network side is received in a predetermined time period or not, if yes, trigger the link disconnection module, otherwise, trigger the message transmission unit to retransmit the LCP terminate request message.

The predetermined time period comprises one or more acknowledgement cycles, and the timing unit is specifically configured to: detect whether the LCP terminate request acknowledgement message returned by the network side is received in one acknowledgement cycle or not,
if yes, trigger the link disconnection module;
otherwise, trigger the message transmission unit to retransmit the LCP terminate request message, and further detect whether the LCP terminate request acknowledgement message is received after retransmitting the LCP terminate request message several times in multiple acknowledgement cycles, if yes, trigger the link disconnection module, otherwise this link disconnection processing fails.

A method for implementing point to point protocol data service link disconnection comprises:
step A: when a terminal performs a Point to Point Protocol (PPP) data service in a dormant state, detecting a state of a PC connected with the terminal;
step B: after establishing a wireless link sending a link disconnection request to a network side when detecting that the PC is determined to be currently in an unavailable state, and disconnecting a PPP link carrying the PPP data service when receiving a link disconnection request acknowledgement from the network side.

The step B specifically comprises:
step B1: when the terminal determines that the PC connected with the terminal is currently in the unavailable state through detecting, judging whether a current state of data service is the dormant state or not, if the state is determined as the dormant state, proceeding to step B2;
step B2: constructing and sending a LCP terminate request message to the network side, and disconnecting the PPP link after receiving a LCP terminate request acknowledgement message returned by the network side.

The step B2 specifically comprises:
step B21: constructing and sending a LCP terminate request message to the network side and starting to carry out timing;
step B22: detecting whether the LCP terminate request acknowledgement message returned by the network side is received in a predetermined time period or not, if yes, disconnecting the PPP link, otherwise, retransmitting the LCP terminate request message to the network side.

The predetermined time period is set to comprise one or more acknowledgement cycles, and then the step B22 specifically comprises:
detecting whether the LCP terminate request acknowledgement message returned by the network side is received in one acknowledgement cycle or not:
if yes, disconnecting the PPP link;
otherwise, retransmitting the LCP terminate request message, and further detecting whether the LCP terminate request acknowledgement message is received after retransmitting the LCP terminate request message for several times in multiple acknowledgement cycles, if yes, disconnecting the PPP link, otherwise, this link disconnection processing failing.

Said detecting the state of the PC connected with the terminal is implemented by detecting whether the terminal generates a Data Terminal Ready (DTR) signal.

The beneficial effects of the present invention are as follows:
the present invention can implement that the abnormality can be detected and the related PPP data service link disconnection processing can be performed if the user unplugs the USB data cable or reboots the PC when performing the PPP data service in the dormant state, thus avoiding the waste of network resources and making the billing of the PPP data service more accurate, moreover, the user does not need to pay the non-essential expenses.

Other features and advantages of the present invention will be described in the following specification, moreover, some of them become apparent from the specification or can be understood through the implementation of the present invention. The purpose and other advantages of the present invention can be implemented and achieved through the structure particularly pointed out in the specification, the claims and the accompanying drawings.

### Brief Description of Drawings

FIG. 1 is a structural schematic diagram of said apparatus in accordance with an embodiment of the present invention;
FIG. 2 is a flow chart of said method in accordance with an embodiment of the present invention.

### Preferred Embodiments of the Present Invention

In the following, the preferred embodiments of the present invention will be described in detail in combination with the accompanying figures, wherein, the accompanying drawings constitute a part of this application, and together with the embodiments of the present invention, it is used to explain the technical solution of the present invention. For the purpose of clarity and simplification, when it might obscure the subject of the present invention, the detailed description of known functions and structures in the apparatus described in this application will be omitted.

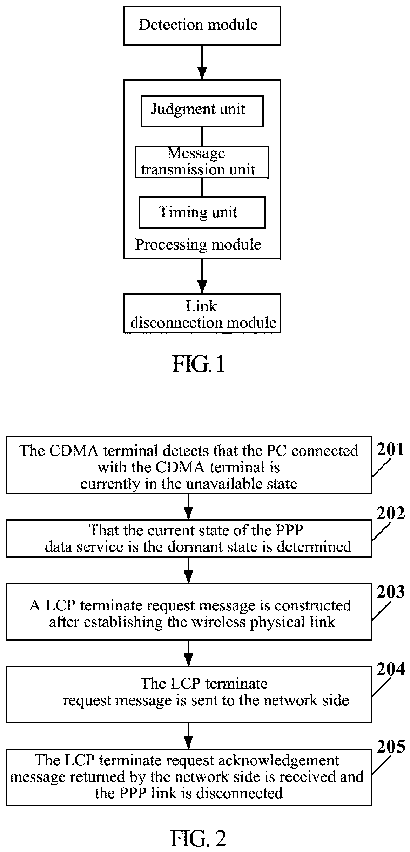

First, said apparatus in accordance with the embodiment of the present invention will be described in detail in combination with the FIG. 1.

Said apparatus in accordance with the embodiment of the present invention is set in the CDMA terminal, and when the CDMA terminal performs the PPP data service in the dormant state, if the user unplugs the USB data cable or reboots the PC, said apparatus can detect the abnormality and perform the PPP data services link disconnection processing.

As shown in FIG. 1, the FIG. 1 is a structural schematic diagram of the apparatus in accordance with the embodiment of the present invention, specifically comprising: the detection module, the processing module and the link disconnection module, wherein,
(1) the detection module is primarily responsible for detecting the state of the PC connected with the CDMA terminal, sending a PC unavailable message to the processing module when it detects that the PC connected with the CDMA terminal is currently in the unavailable state, and informing the unavailable state of the PC to the processing module;
   wherein, the method for detecting the state of the PC connected with the CDMA terminal can use the method for detecting the DTR (Data Terminal Ready) signal, that is, when the user unplugs the USB data cable or reboots the PC, the CDMA terminal will generate one DTR signal, and the detection module can judge whether the state of the PC connected with the CDMA terminal is available by detecting the existence of the signal.
(2) Said processing module is configured to receive the PC unavailable message from the detection module, construct and send a link control protocol (LCP) terminate request message to the network side, and trigger the link disconnection module when receiving the LCP terminate request acknowledgement message returned by the network side;
specifically, after the processing module receives the PC unavailable message sent by the detection module, it judges whether the current state of the PPP data service is the dormant state or not, and when the state is determined as the dormant state, the processing module initializes the PPP LCP related resources after establishing the wireless link, and it constructs and sends the LCP terminate request message to the network side, and receives a terminate request acknowledgement message returned by the network side and then triggers the link disconnection module to perform the link disconnection processing, and it notifies the network side to perform the link disconnection processing at the same time, and the link disconnection module and the network side disconnect the PPP link and release the PPP LCP related resources; when the state is determined not to be the dormant state, no processing is performed;
wherein, the processing module specifically comprises: the judgment unit, the message transmission unit and the timing unit, wherein,
the judgment unit is configured to, when knowing that the PC is currently in the unavailable state, judge whether the current state of the PPP data service is the dormant state or not, and if the state is determined as the dormant state, trigger the message transmission unit;
the message transmission unit is configured to construct and send the LCP terminate request message to the network side and trigger the timing unit to start timing after being triggered by the judgment unit;
the timing unit is configured to detect whether the LCP terminate request acknowledgement message returned by the network side is received in a predetermined time period, if yes, trigger the link disconnection module, otherwise, trigger the message transmission unit to retransmit the LCP terminate request message; wherein, the predetermined time can comprise one or more acknowledgement cycles

In the embodiment of the present invention, the timing unit can use one timer, and the counting value of retransmissions of the LCP terminate request message is initialized and the timer is started, and it is detected whether the LCP terminate request acknowledgement message returned by the network side is received in one acknowledgement cycle or not:
if the LCP terminate request acknowledgement message returned by the network side is received in one acknowledgement cycle, timing is stopped and the link disconnection module is triggered to perform the link disconnection processing;
if the LCP terminate request acknowledgement message returned by the network side is not received in one acknowledgement cycle, the message transmission unit is triggered to retransmit the LCP terminate request message, and it is further detected whether the LCP terminate request acknowledgement message is received after retransmitting the LCP terminate request message several times in multiple acknowledgement cycles, and if yes, the link disconnection module is triggered and the network side is notified to disconnect the link, if the LCP terminate request acknowledgement message is still not received when the counting value of retransmissions changes to zero after the LCP terminate request message is retransmitted for several times, this link disconnection processing is considered as failed.
   (3) the link disconnection module is configured to disconnect the PPP link and release the PPP LCP related resources after triggered by the processing module;
similarly, the network side receives the link disconnection request such as the LCP terminate request message from the processing module, and then it also releases the CDMA traffic channel resources and disconnects the PPP link; the specific link disconnection process can use the technical solution in the prior art, which is not repeated here.

The embodiment of the present invention adds the PPP LCP link management and link disconnection function in the CDMA terminal, applying for and initializing the PPP LCP related resources, and the link disconnection request is sent to the network side, and after the network side receives the link disconnection request, it sends a link disconnection request acknowledgement to the CDMA terminal, thus avoiding the waste of network resources and also making the billing of the PPP data service more accurate.

In the following, the method in the embodiment of the present invention will be described in detail in combination with the FIG. 2.

When the CDMA terminal performs the PPP data service in the dormant state, if the user unplugs the USB data cable or reboots the PC, the method in the embodiment of the present invention can detect the abnormality and perform the PPP data service link disconnection related processing.

As shown in FIG. 2, FIG. 2 is a flow chart of the method in accordance with the embodiment of the present invention, specifically comprising the following steps:
step 201: the CDMA terminal detects the state of the PC connected with the CDMA terminal, and proceed to step 202 when it detects that the PC connected with the CDMA terminal is currently in the unavailable state;
step 202: it is judged whether the current state of the PPP data service is the dormant state or not, and proceed to step 203 when the state is determined as the dormant state;
step 203: the PPP LCP related resources are initialized and a LCP terminate request message is constructed;
step 204: the LCP terminate request message is sent to the network side;
step 205: the LCP terminate request acknowledgement message returned by the network side is received, the PPP link is disconnected and the PPP LCP related resources are released;
   specifically, the preset time is set to comprise a plurality of acknowledgement cycles, and the LCP terminate request message is sent to the network side, and the counting value of retransmissions of the LCP terminate request message is initialized at first and timing is started, and it is detected whether the LCP terminate request acknowledgement message returned by the network side is received in one acknowledgement cycle or not:
   if the LCP terminate request acknowledgement message is received in one acknowledgement cycle, timing is stopped and the PPP link is disconnected, and the PPP LCP related resources are released;
   if the LCP terminate request acknowledgement message returned by the network side is not received in one acknowledgement cycle, the LCP terminate request message is retransmitted, and if the LCP terminate request acknowledgement message is received after retransmitting the LCP terminate request message for several times in multiple acknowledgement cycles, the PPP link is disconnected, the PPP LCP related resources are released and the network side disconnects the PPP link, and if the LCP terminate request acknowledgement message is still not received after retransmitting the LCP terminate request message for several times in multiple acknowledgement cycles, this link disconnection processing is considered as failed.

In summary, the embodiment of the present invention provides an apparatus and method for implementing the link disconnection of point to point protocol data service, and when the CDMA terminal performs the PPP data service in the dormant state, if the PC is rebooted or the USB data cable is unplugged, the embodiment of the present invention can detect the abnormality and perform the PPP data service link disconnection related processing, so that the user can immediately end the PPP data service when the PPP data service is not in use; and when the CDMA terminal does not use the data service, the network stops the user's PPP data service, thereby reducing the waste of network resources and making the billing of the user's PPP data service more accurate.

The above description is only the specific preferred embodiments of the present invention, and it is not intended to limit the protection scope of the present invention. Therefore, the protection scope of the present invention should be subject to the protection scope of the claims.

## Claims

1. An apparatus for implementing Point to Point Protocol, PPP, data service link disconnection, being set in a terminal, comprising: a detection module, a processing module and a link disconnection module, wherein,
the detection module is configured to detect a state of a PC connected with the terminal when the terminal performs a Point to Point Protocol, PPP, data service in a dormant state (202), and inform the processing module when determining that the PC is currently in an unavailable state (201);
the processing module is configured after establishing a wireless link (203) to send a link disconnection request to a network side (204) when knowing that said PC is in the unavailable state and trigger the link disconnection module when receiving a link disconnection request acknowledgement from the network side;
the link disconnection module is configured to disconnect a PPP link carrying the PPP data service (205).

2. The apparatus of claim 1, wherein the processing module is specifically configured to:
when knowing that the PC is currently in the unavailable state, judge whether a current state of the PPP data service is the dormant state or not, and if the state is determined as the dormant state, construct and send a Link Control Protocol (LCP) terminate request message to the network side, and trigger the link disconnection module after receiving a LCP terminate request acknowledgement message returned by the network side.

3. The apparatus of claim 2, wherein said processing module specifically comprises: a judgment unit, a message transmission unit and a timing unit, wherein,
the judgment unit is configured to, when knowing that the PC is currently in the unavailable state, judge whether the current state of data service is the dormant state or not, and if the state is determined as the dormant state, trigger the message transmission unit;
the message transmission unit is configured to construct and send the LCP terminate request message to the network side, and trigger the timing unit to start timing;
the timing unit is configured to detect whether the LCP terminate request acknowledgement message returned by the network side is received in a predetermined time period or not, if yes, trigger the link disconnection module, otherwise, trigger the message transmission unit to retransmit the LCP terminate request message.

4. The apparatus of claim 3, wherein the predetermined time period is set to comprise one or more acknowledgement cycles, and the timing unit is specifically configured to: detect whether the LCP terminate request acknowledgement message returned by the network side is received in one acknowledgement cycle or not,
if yes, trigger the link disconnection module;
otherwise, trigger the message transmission unit to retransmit the LCP terminate request message, and further detect whether the LCP terminate request acknowledgement message is received after retransmitting the LCP terminate request message several times in multiple acknowledgement cycles, if yes, trigger the link disconnection module, otherwise this link disconnection processing fails.

5. A method for implementing point to point protocol, PPP, data service link disconnection, the method comprising:
step A: when a terminal performs a PPP data service in a dormant state (202), detecting a state of a PC connected with the terminal (201);
step B: after establishing a wireless link (203) sending a link disconnection request to a network side when detecting that the PC is determined to be currently in an unavailable state (204), and disconnecting a PPP link carrying the PPP data service when receiving a link disconnection request acknowledgement from the network side (205).

6. The method of claim 5, wherein the step B specifically comprises:
step B1: when the terminal determines that the PC connected with the terminal is currently in the unavailable state through detecting, judging whether a current state of data service is the dormant state or not, if the state is determined as the dormant state, proceeding to step B2;
step B2: constructing and sending a LCP terminate request message to the network side, and disconnecting the PPP link after receiving a LCP terminate request acknowledgement message returned by the network side.

7. The method of claim 6, wherein the step B2 specifically comprises:
step B21: constructing and sending the LCP terminate request message to the network side and starting to carry out timing;
step B22: detecting whether the LCP terminate request acknowledgement message returned by the network side is received in a predetermined time period or not, if yes, disconnecting the PPP link, otherwise, retransmitting the LCP terminate request message to the network side.

8. The method of claim 7, wherein the predetermined time period is set to comprise one or more acknowledgement cycles, and then the step B22 specifically comprises:
detecting whether the LCP terminate request acknowledgement message returned by the network side is received in one acknowledgement cycle or not:
if yes, disconnecting the PPP link;
otherwise, retransmitting the LCP terminate request message, and further detecting whether the LCP terminate request acknowledgement message is received after retransmitting the LCP terminate request message for several times in multiple acknowledgement cycles, if yes, disconnecting the PPP link, otherwise, this link disconnection processing failing.

9. The method of any one of claims 5-8, wherein, said detecting the state of the PC connected with the terminal is implemented by detecting whether the terminal generates a Data Terminal Ready (DTR) signal.

## Patentansprüche

1. Eine Vorrichtung zum Implementieren einer Verbindungstrennung bei einem Punkt-zu-Punkt-Protokoll-Datendienst (PPP-Datendienst), die in einem Endgerät eingerichtet ist, beinhaltend: ein Detektionsmodul, ein Verarbeitungsmodul und ein Verbindungstrennungsmodul, wobei
das Detektionsmodul konfiguriert ist, einen Status eines PC zu detektieren, der mit dem Endgerät verbunden ist, wenn das Endgerät einen Punkt-zu-Punkt-Protokoll-Datendienst (PPP-Datendienst) in einem Ruhestatus durchführt (202), und das Verarbeitungsmodul zu informieren, wenn bestimmt wird, dass sich der PC aktuell in einem Nicht-verfügbar-Status befindet (201);
das Verarbeitungsmodul konfiguriert ist, nach Herstellen einer drahtlosen Verbindung (203), eine Verbindungstrennungsanfrage an eine Netzwerkseite zu senden (204), wenn bekannt ist, dass sich der PC in dem Nicht-verfügbar-Status befindet, und das Verbindungstrennungsmodul auszulösen, wenn eine Verbindungstrennungsanfragebestätigung von der Netzwerkseite empfangen wird; das Verbindungstrennungsmodul konfiguriert ist, eine PPP-Verbindung, die den PPP-Datendienst führt, zu trennen (205).

2. Vorrichtung gemäß Anspruch 1, wobei das Verarbeitungsmodul speziell für Folgendes konfiguriert ist:
wenn bekannt ist, dass sich der PC aktuell in dem Nicht-verfügbar-Status befindet, Beurteilen, ob ein aktueller Status des PPP-Datendienstes der Ruhestatus ist oder nicht, und falls der Status als der Ruhestatus bestimmt wird, Erstellen und Senden einer Verbindungssteuerungsprotokoll-Abbruchanfragenachricht (LCP-Abbruchanfragenachricht, LCP = Link Control Protocol) an die Netzwerkseite und Auslösen des Verbindungstrennungsmoduls nach dem Empfangen einer von der Netzwerkseite zurückgesendeten LCP-Abbruchanfragebestätigungsnachricht.

3. Vorrichtung gemäß Anspruch 2, wobei das Verarbeitungsmodul speziell Folgendes beinhaltet: eine Beurteilungseinheit, eine Nachrichtenübertragungseinheit und eine Zeitmessungseinheit, wobei
die Beurteilungseinheit konfiguriert ist, wenn bekannt ist, dass sich der PC aktuell in dem Nicht-verfügbar-Status befindet, zu beurteilen, ob der aktuelle Status des Datendienstes der Ruhestatus ist oder nicht, und falls der Status als der Ruhestatus bestimmt wird, die Nachrichtenübertragungseinheit auszulösen;
die Nachrichtenübertragungseinheit konfiguriert ist, die LCP-Abbruchanfragenachricht zu erstellen und an die Netzwerkseite zu senden und die Zeitmessungseinheit auszulösen, um die Zeitmessung zu starten;
die Zeitmessungseinheit konfiguriert ist, zu detektieren, ob die von der Netzwerkseite zurückgesendete LCP-Abbruchanfragebestätigungsnachricht in einem vorbestimmten Zeitraum empfangen wird oder nicht, falls ja, das Verbindungstrennungsmodul auszulösen, andernfalls die Nachrichtenübertragungseinheit auszulösen, um die LCP-Abbruchanfragenachricht erneut zu übertragen.

4. Vorrichtung gemäß Anspruch 3, wobei der vorbestimmte Zeitraum so eingerichtet ist, dass er einen oder mehrere Bestätigungszyklen beinhaltet, und die Zeitmessungseinheit speziell für Folgendes konfiguriert ist: Detektieren, ob die von der Netzwerkseite zurückgesendete LCP-Abbruchanfragebestätigungsnachricht in einem Bestätigungszyklus empfangen wird oder nicht,
falls ja, Auslösen des Verbindungstrennungsmoduls;
andernfalls Auslösen der Nachrichtenübertragungseinheit, um die LCP-Abbruchanfragenachricht erneut zu übertragen, und ferner Detektieren, ob die LCP-Abbruchanfragebestätigungsnachricht empfangen wird, nachdem die LCP-Abbruchanfragenachricht mehrmals in mehreren Bestätigungszyklen erneut übertragen wurde, falls ja, Auslösen des Verbindungstrennungsmoduls, andernfalls Fehlschlagen dieser Verbindungstrennungsverarbeitung.

5. Ein Verfahren zum Implementieren einer Verbindungstrennung bei einem Punkt-zu-Punkt-Protokoll-Datendienst (PPP-Datendienst), wobei das Verfahren Folgendes beinhaltet:
Schritt A: wenn ein Endgerät einen PPP-Datendienst in einem Ruhestatus durchführt (202), Detektieren eines Status eines PC, der mit dem Endgerät verbunden ist (201);
Schritt B: nach Herstellen einer drahtlosen Verbindung (203) Senden einer Verbindungstrennungsanfrage an eine Netzwerkseite, wenn detektiert wird, dass bestimmt wird, dass sich der PC aktuell in einem Nicht-verfügbar-Status befindet (204), und Trennen einer PPP-Verbindung, die den PPP-Datendienst führt, wenn eine Verbindungstrennungsanfragebestätigung von der Netzwerkseite empfangen wird (205).

6. Verfahren gemäß Anspruch 5, wobei der Schritt B speziell Folgendes beinhaltet:
Schritt B1: wenn das Endgerät durch Detektieren bestimmt, dass sich der PC, der mit dem Endgerät verbunden ist, aktuell in dem Nicht-verfügbar-Status befindet, Beurteilen, ob ein aktueller Status des Datendienstes der Ruhestatus ist oder nicht, und falls der Status als der Ruhestatus bestimmt wird, Fortsetzen mit Schritt B2;
Schritt B2: Erstellen und Senden einer LCP-Abbruchanfragenachricht an die Netzwerkseite und Trennen der PPP-Verbindung nach dem Empfangen einer von der Netzwerkseite zurückgesendeten LCP-Abbruchanfragebestätigungsnachricht.

7. Verfahren gemäß Anspruch 6, wobei der Schritt B2 speziell Folgendes beinhaltet:
Schritt B21: Erstellen und Senden der LCP-Abbruchanfragenachricht an die Netzwerkseite und Starten mit dem Ausführen der Zeitmessung;
Schritt B22: Detektieren, ob die von der Netzwerkseite zurückgesendete LCP-Abbruchanfragebestätigungsnachricht in einem vorbestimmten Zeitraum empfangen wird oder nicht, falls ja, Trennen der PPP-Verbindung, andernfalls erneutes Übertragen der LCP-Abbruchanfragenachricht an die Netzwerkseite.

8. Verfahren gemäß Anspruch 7, wobei der vorbestimmte Zeitraum so eingerichtet ist, dass er einen oder mehrere Bestätigungszyklen beinhaltet, und dann der Schritt B22 speziell Folgendes beinhaltet:
Detektieren, ob die von der Netzwerkseite zurückgesendete LCP-Abbruchanfragebestätigungsnachricht in einem Bestätigungszyklus empfangen wird oder nicht:
falls ja, Trennen der PPP-Verbindung;
andernfalls erneutes Übertragen der LCP-Abbruchanfragenachricht und ferner Detektieren, ob die LCP-Abbruchanfragebestätigungsnachricht empfangen wird, nachdem die LCP-Abbruchanfragenachricht mehrmals in mehreren Bestätigungszyklen erneut übertragen wurde, falls ja, Trennen der PPP-Verbindung, andernfalls Fehlschlagen dieser Verbindungstrennungsverarbeitung.

9. Verfahren gemäß einem der Ansprüche 5-8, wobei das Detektieren des Zustands des PC, der mit dem Endgerät verbunden ist, implementiert wird durch das Detektieren, ob das Endgerät ein Datenendgerät-bereit-Signal (DTR-Signal, DTR = Data Terminal Ready) erzeugt.

## Revendications

1. Un appareil pour la mise en oeuvre d'une déconnexion de liaison de service de données de protocole point à point, PPP, étant placé dans un terminal, comprenant : un module de détection, un module de traitement et un module de déconnexion de liaison, dans lequel,
le module de détection est configuré pour détecter un état d'un PC connecté au terminal lorsque le terminal effectue un service de données de protocole point à point, PPP, dans un état dormant (202), et informer le module de traitement lors de la détermination du fait que le PC est actuellement dans un état indisponible (201) ;
le module de traitement est configuré après l'établissement d'une liaison sans fil (203) pour envoyer une demande de déconnexion de liaison à un côté réseau (204) lors de la connaissance du fait que ledit PC est dans l'état indisponible et déclencher le module de déconnexion de liaison lors de la réception d'un accusé de réception de demande de déconnexion de liaison en provenance du côté réseau ;
le module de déconnexion de liaison est configuré pour déconnecter une liaison PPP portant le service de données PPP (205).

2. L'appareil de la revendication 1, dans lequel le module de traitement est spécifiquement configuré pour :
lors de la connaissance du fait que le PC est actuellement dans l'état indisponible, évaluer si un état actuel du service de données PPP est dans l'état dormant ou pas, et si l'état est déterminé comme l'état dormant, construire et envoyer un message de demande de terminaison de protocole de commande de liaison (LCP) au côté réseau, et déclencher le module de déconnexion de liaison après réception d'un message d'accusé de réception de demande de terminaison de LCP renvoyé par le côté réseau.

3. L'appareil de la revendication 2, dans lequel ledit module de traitement comprend spécifiquement : une unité d'évaluation, une unité de transmission de message et une unité de chronométrage, dans lequel,
l'unité d'évaluation est configurée pour, lors de la connaissance du fait que le PC est actuellement dans l'état indisponible, évaluer si l'état actuel du service de données est l'état dormant ou pas, et si l'état est déterminé comme l'état dormant, déclencher l'unité de transmission de message ;
l'unité de transmission de message est configurée pour construire et envoyer le message de demande de terminaison de LCP au côté réseau, et déclencher l'unité de chronométrage pour commencer à chronométrer ;
l'unité de chronométrage est configurée pour détecter si le message d'accusé de réception de demande de terminaison de LCP renvoyé par le côté réseau est reçu dans une période de temps prédéterminée ou pas, si oui, déclencher le module de déconnexion de liaison, sinon, déclencher l'unité de transmission de message pour retransmettre le message de demande de terminaison de LCP.

4. L'appareil de la revendication 3, dans lequel la période de temps prédéterminée est réglée pour comprendre un ou plusieurs cycles d'accusé de réception, et l'unité de chronométrage est spécifiquement configurée pour : détecter si le message d'accusé de réception de demande de terminaison de LCP renvoyé par le côté réseau est reçu dans un cycle d'accusé de réception ou pas,
si oui, déclencher le module de déconnexion de liaison ;
sinon, déclencher l'unité de transmission de message pour retransmettre le message de demande de terminaison de LCP, et détecter en sus si le message d'accusé de réception de demande de terminaison de LCP est reçu après la retransmission du message de demande de terminaison de LCP plusieurs fois dans de multiples cycles d'accusé de réception, si oui, déclencher le module de déconnexion de liaison, sinon ce traitement de déconnexion de liaison échoue.

5. Un procédé pour la mise en oeuvre d'une déconnexion de liaison de service de données de protocole point à point, PPP, le procédé comprenant :
étape A : lorsqu'un terminal effectue un service de données PPP dans un état dormant (202), la détection d'un état d'un PC connecté au terminal (201) ;
étape B : après l'établissement d'une liaison sans fil (203), l'envoi d'une demande de déconnexion de liaison à un côté réseau lors de la détection du fait que le PC est déterminé comme étant actuellement dans un état indisponible (204), et la déconnexion d'une liaison PPP portant le service de données PPP lors de la réception d'un accusé de réception de demande de déconnexion de liaison en provenance du côté réseau (205).

6. Le procédé de la revendication 5, dans lequel l'étape B comprend spécifiquement :
étape B1 : lorsque le terminal détermine que le PC connecté au terminal est actuellement dans l'état indisponible au travers de la détection, le fait d'évaluer si un état actuel du service de données est l'état dormant ou pas, si l'état est déterminé comme l'état dormant, de passer à l'étape B2 ;
étape B2 : la construction et l'envoi d'un message de demande de terminaison de LCP au côté réseau, et la déconnexion de la liaison PPP après réception d'un message d'accusé de réception de demande de terminaison de LCP renvoyé par le côté réseau.

7. Le procédé de la revendication 6, dans lequel l'étape B2 comprend spécifiquement :
étape B21 : la construction et l'envoi du message de demande de terminaison de LCP au côté réseau et le démarrage de l'exécution du chronométrage ;
étape B22 : la détection de si le message d'accusé de réception de demande de terminaison de LCP renvoyé par le côté réseau est reçu dans une période de temps prédéterminée ou pas, si oui, la déconnexion de la liaison PPP, sinon, la retransmission du message de demande de terminaison de LCP au côté réseau.

8. Le procédé de la revendication 7, dans lequel la période de temps prédéterminée est réglée pour comprendre un ou plusieurs cycles d'accusé de réception, et ensuite l'étape B22 comprend spécifiquement :
la détection de si le message de demande de terminaison de LCP renvoyé par le côté réseau est reçu dans un cycle d'accusé de réception ou pas :
si oui, la déconnexion de la liaison PPP ;
sinon, la retransmission du message de demande de terminaison de LCP, et en sus la détection de si le message d'accusé de réception de demande de terminaison de LCP est reçu après la retransmission du message de demande de terminaison de LCP plusieurs fois dans de multiples cycles d'accusé de réception, si oui, la déconnexion de la liaison PPP, sinon, l'échec de ce traitement de déconnexion de liaison.

9. Le procédé de n'importe laquelle des revendications 5 à 8, dans lequel, ladite détection de l'état du PC connecté au terminal est mise en oeuvre par la détection de si le terminal génère un signal de terminal de données prêt (DTR).
